# EUROPEAN PATENT APPLICATION

(11) **EP 4 239 731 A1**
(43) Date of publication of application: **06.09.2023**
(21) Application number: 23158223.0
(22) Date of filing: 23.02.2023
(51) Int. Cl.: H01M 4/86, H01M 4/88, H01M 4/90, H01M 8/1213, H01M 8/1231, H01M 8/1253, H01M 8/126, H01M 8/18

(54) **SOLID OXIDE ELECTROCHEMICAL CELL AND USE THEREOF**

(30) Priority: 02.03.2022 JP 2022031903
(71) Applicant: Japan Fine Ceramics Center, Nagoya-shi, Aichi 456-8587 (JP); Toshiba Energy Systems & Solutions Corporation, Saiwai-ku Kawasaki-Shi Kanagawa 2120013 (JP)
(72) Inventor: KAWAHARA, Koichi, Nagoya-shi (JP); SUZUKI, Masaya, Nagoya-shi (JP); OSADA, Norikazu, Kawasaki-shi (JP); INUZUKA, Riko, Kawasaki-shi (JP); KAMEDA, Tsuneji, Minato-ku (JP); KAWAMORI, Hiroaki, Kawasaki-shi (JP)
(74) Representative: J A Kemp LLP

(57) **Abstract**

A solid oxide electrochemical cell includes an oxygen electrode containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions), a solid electrolyte containing zirconium oxide, a hydrogen electrode, and an interlayer containing a rare-earth-doped cerium oxide that is provided between the solid electrolyte and the oxygen electrode.

## Description

### REFERENCE TO RELATED APPLICATIONS

This application claims priority from Japanese Patent Application No. 2022-31903 filed on March 2, 2022. The entire content of the priority application is incorporated herein by reference.

The disclosure herein relates to a solid oxide electrochemical cell, a use thereof and the like.

### BACKGROUND ART

Solid oxide electrochemical cells include solid oxide electrolysis cells (SOEC) and solid oxide fuel cells (SOFC). It is known that the performance of these electrochemical cells is greatly influenced not only by properties of an electrode material and an electrolyte material but also by a resistance layer that may be formed at an interface between an electrode and an electrolyte. It has been pointed out that, in a cell using a commonly used YSZ electrolyte and an LSCF ((LaSr)(CoFe)O_{3-δ}) oxygen electrode, SrZrO₃ with high resistance is formed at the interface between the electrolyte and the oxygen electrode. Therefore, in order to prevent a reaction, a ceria-based interlayer is introduced at the interface between the oxygen electrode and the electrolyte (Japanese Patent Application Publication No. 2017-69214).

However, even if the interlayer is introduced, SrZrO₃ with high resistance is formed at an interface between the interlayer and the electrolyte. Therefore, there is still a demand for inhibiting formation of a high-resistance layer in electrochemical cells.

### DESCRIPTION

The disclosure herein provides a technique that can further inhibit the formation of a high resistance phase between an oxygen electrode and an electrolyte.

The inventors studied the reason why SrZrO₃ is still formed even if a ceria-based interlayer is introduced. As a result, it was found that, during heating such as cell firing, Sr diffuses through an interlayer from an oxygen electrode, reaches the interface with YSZ, which is a solid electrolyte, and Sr reacts with Zr which has high reactivity with Sr to form SrZrO₃. Therefore, the present inventors have focused on Ti which has higher reactivity with Sr than Zr. Furthermore, the present inventors have also paid attention to Zr and Ce. Further, the inventors found that, when Ti or Ce are doped into an oxygen electrode material, diffusion of Sr is inhibited during heating, and it is possible to inhibit the formation of SrZrO₃ at the YSZ interface. The disclosure herein provides the following techniques based on these findings.
[1] A solid oxide electrochemical cell including:
   an oxygen electrode containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions);
   a solid electrolyte containing zirconium oxide;
   a hydrogen electrode, and
   an interlayer containing a rare-earth-doped cerium oxide that is provided between the solid electrolyte and the oxygen electrode.
[2] The cell according to [1],
   wherein B in the strontium-containing perovskite-type composite oxide is one or more selected from the group consisting of titanium (Ti), zirconium (Zr) and cerium (Ce).
[3] The cell according to [1] or [2],
   wherein Ln in the strontium-containing perovskite-type composite oxide is lanthanum (La) or samarium (Sm).
[4] The cell according to any one of [1] to [3],
   wherein z/(1-z) in the strontium-containing perovskite-type composite oxide is 0.01 or more and 0.40 or less.
[5] The cell according to any one of [1] to [4],
   wherein z/(1-z) in the strontium-containing perovskite-type composite oxide is 0.02 or more and 0.40 or less.
[6] The cell according to any one of [1] to [4],
   wherein z/(1-z) in the strontium-containing perovskite-type composite oxide, when B is Ce, is 0.005 or more and 0.11 or less.
[7] The cell according to any one of [1] to [6],
   wherein (1-y-z) in the strontium-containing perovskite-type composite oxide is 0.05 or more and 0.30 or less.
[8] The cell according to any one of [1] to [7],
   wherein the zirconium oxide in the solid electrolyte is a rare-earth-doped zirconium oxide.
[9] The cell according to any one of [1] to [8],
   wherein the rare-earth-doped cerium oxide in the interlayer is at least one selected from the group consisting of a gadolinium-doped cerium oxide, a lanthanum-doped cerium oxide, a samarium-doped cerium oxide and an yttrium-doped cerium oxide.
[10] The cell according to [9],
   wherein the zirconium oxide in the solid electrolyte is a rare-earth-doped zirconium oxide, and the rare-earth-doped cerium oxide in the interlayer is a gadolinium-doped cerium oxide.
[11] A solid oxide electrochemical device including the cell according to any one of [1] to [10].
[12] The solid oxide electrochemical device according to [11], which is a solid oxide fuel cell and/or a solid oxide electrolysis cell.
[13] An oxygen electrode material for a solid oxide electrochemical cell, which is a material containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions).
[14] The oxygen electrode material according to [13], which is a porous sintered component.
[15] A method of producing a solid oxide electrochemical cell, including
   a process of preparing the cell including an oxygen electrode layer containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and
δ is a value that is determined to satisfy charge neutrality conditions), an interlayer containing a rare-earth-doped cerium oxide, a solid electrolyte layer containing zirconium oxide and a hydrogen electrode layer in that order.
FIG. 1 shows images of SEM observation results of LSCF powders synthesized by a spray pyrolysis method in which Fe was substituted with Ti at various ratios. x in the formula in this figure corresponds to z in a composition formula of a composite oxide disclosed herein. The same applies to the following figures.
FIG. 2 shows the evaluation results of a particle size distribution of LSCF powders synthesized by a spray pyrolysis method in which Fe was substituted with Ti at various ratios.
FIG. 3 shows diagrams of XRD measurement results of LSCF powders synthesized by a spray pyrolysis method in which Fe was substituted with Ti at various ratios.
FIG. 4 is a schematic illustration showing an overview of a laminate for SOFC produced in Example 2.
FIG. 5 shows images of SEM analysis results of laminates for SOFC using an LSCF in which Fe was substituted with Ti at various ratios as an oxygen electrode.
FIG. 6 shows images of SEM/EDX(Sr) analysis results of laminates for SOFC using an LSCF in which Fe was substituted with Ti at various ratios as an oxygen electrode.
FIG. 7 is a diagram showing a maximum power density of an SOFC using an LSCF in which Fe was substituted with Ti at various ratios as an oxygen electrode at 800°C.
FIG. 8 is a diagram showing XRD measurement results of an LSCF powder in which Fe was substituted with Zr at the ratio of x=0.15.
FIG. 9 shows images of EDX(Sr, Co) analysis results of laminates for SOFC using an LSCF powder in which Fe was substituted with Zr at the ratio of x=0.15.
FIG. 10 shows images of SEM/EDX(Sr) analysis results of laminates for SOFC using an LSCF in which Fe was substituted with Ce at various ratios as an oxygen electrode.
FIG. 11 shows SEM images (LDC; Lanthanum solid solution ceria) of an oxygen electrode of laminates for SOFC using an LSCF in which Fe was substituted with Ce at various ratios.
FIG. 12 is a diagram showing a maximum power density of an SOFC including an LSCF in which Fe was substituted with Ce at various ratios as an oxygen electrode at 800°C.

The disclosure herein relates to a solid oxide electrochemical cell, a use thereof and the like.

A solid oxide electrochemical cell disclosed herein (hereinafter simply referred to as a cell) includes a hydrogen electrode, an oxygen electrode, a solid electrolyte, and a ceria-based interlayer that is introduced between the oxygen electrode and the solid electrolyte, and the oxygen electrode contains a strontium-containing perovskite-type composite oxide (hereinafter simply referred to as the composite oxide) represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions). Therefore, during heating such as firing of the oxygen electrode and co-firing of the oxygen electrode, the interlayer and the solid electrolyte, thermal diffusion of strontium in the oxygen electrode is inhibited, resulting in reducing the amount of strontium that passes through the interlayer from the oxygen electrode and then reduced thermal diffusion of strontium to the solid electrolyte leads to reduction of the formation of SrZrO₃ with high resistance at an interface between the solid electrolyte and the interlayer.

When the formation of a phase containing SrZrO₃ with high resistance is inhibited, an efficient electrochemical reaction is realized in both a solid oxide electrolysis cell and a solid oxide fuel cell. In addition, with the oxygen electrode material in the solid oxide electrochemical cell disclosed herein, it is possible to inhibit thermal diffusion of strontium even though an interlayer has been introduced. Therefore, it is possible to inhibit the formation of a high resistance phase at the interface between the interlayer and the solid electrolyte.

In addition, the method of producing a solid oxide electrochemical cell disclosed herein includes a process of heating an oxygen electrode material layer containing the composite oxide. In the heating process, thermal diffusion of strontium is inhibited. Therefore, in the heating process and also during other heating, it is possible to inhibit strontium from moving toward the interlayer and the solid electrolyte due to thermal diffusion. Accordingly, it is possible to inhibit the formation of a high resistance phase at the interface between the interlayer and the solid electrolyte layer.

In the disclosure herein, the solid oxide electrochemical cells include solid oxide electrolysis cells (SOEC) and solid oxide fuel cells (SOFC). Solid oxide electrochemical cells may be used as the SOEC or used as the SOFC. In the disclosure herein, the oxygen electrode is an electrode in which oxygen is generated in an SOEC, and is an electrode (air electrode) to which oxygen (air) is supplied in an SOFC. In addition, in the disclosure herein, the hydrogen electrode is an electrode in which water (water vapor) is supplied and hydrogen is generated in an SOEC and is an electrode (fuel electrode) to which hydrogen is supplied in an SOFC.

Hereinafter, embodiments of a solid oxide electrochemical cell, a solid oxide electrochemical device, an oxygen electrode material of a solid oxide electrochemical cell, and a method of producing a solid oxide electrochemical cell disclosed herein will be described in detail.

### Solid Oxide Electrochemical Cell

The solid oxide electrochemical cell may include an oxygen electrode, a solid electrolyte, a hydrogen electrode, and an interlayer that is introduced between the solid electrolyte and the oxygen electrode.

### Oxygen Electrode

The oxygen electrode in the cell may contain the composite oxide represented by Ln₁₋ₓSrₓCo_{1-y-z}Fe_{y}B_{z}O_{3-δ}. Here, Ln is a trivalent lanthanide element, B is a tetravalent element, 0<x<1, 0≤y<1, 0<z<1, and 0<z+y<1, and δ is a value that is determined to satisfy charge neutrality conditions. Here, δ varies depending on the type of atoms that substitute a part of the perovskite structure, but typically 0≤δ<1.

The ratio of respective elements in the composite oxide can be easily determined by producing an SOEC or SOFC including a ceria-based interlayer between the oxygen electrode and the solid electrolyte, or a laminate that is a precursor thereof, and then evaluating thermal diffusion of Sr or a formation amount of SrZrO₃, or evaluating the performance of the SOEC or SOFC.

The composite oxide includes Sr as an A-site element. In addition, it includes Ln as another A-site element. Ln is not particularly limited as long as it is a trivalent lanthanide element, and is, for example, lanthanum (La) or samarium (Sm).

The value of x for Sr and Ln is not particularly limited. The value of x for the Sr content is 0<x<1, for example, 0.2 or more and 0.8 or less, for example, 0.3 or more and 0.7 or less, for example, 0.3 or more and 0.6 or less, for example, 0.3 or more and 0.5 or less, for example, 0.5, or for example, 0.4. If Ln is La, x is preferably 0.4 in some cases. In addition, if I_,n is Sm, x is preferably 0.5 in some cases. The value of 1-x for the Ln content is determined according to the value of x.

The composite oxide includes Co as a B-site element. In addition, it may include Fe as a B-site element. Therefore, the B-site element may include Co only or a combination of Co and Fe.

The value of 1-y-z for the Co content at the B site is 0<(1-y-z)<1. Although it is not particularly limited, it is, for example, 0.01 or more and less than 1, for example, 0.01 or more and 0.98 or less, for example, 0.05 or more and 0.9 or less, or for example, 0.05 or more and 0.65 or less, or for example, 0.05 or more and 0.6 or less, or for example, 0.05 or more, 0.5 or less, or, for example, 0.05 or more and 0.4 or less, or, for example, 0.05 or more and 0.3 or less, or, for example, 0.05 or more and 0.3 or less, or For example, it is 0.05 or more and 0.2 or less. Further, for example, 0.01 or more and 0.98 or less, for example, 0.01 or more and 0.90 or less, for example, 0.01 or more and 0.65 or less, for example, 0.1 or more and 0.6 or less, for example, 0.1 or more and 0.5 or less, for example, 0.1 or more and 0.4 or less, 0.1 or more and 0.3 or less, or for example, 0.2.

The value for the Fe content as the B-site element is, for example, 0, for example, 0.3 or more and 0.95 or less, or for example, 0.3 or more and 0.9 or less, or for example, 0.3 or more and 0.8 or less, or for example, 0.4 or more and 0.95 or less, or for example, 0.4 or more and 0.9 or less, or 0.4 or more and 0.8 or less, for example, 0.5 or more and 0.95 or less, or for example, 0.5 or more and 0.9 or less, or for example, 0.5 or more and 0.8 or less, or for example, 0.6 or more and 0.95 or less, or, for example, 0.6 or more and 0.9 or less, or, for example, 0.6 or more and 0.8 or less, or, for example, 0.65 or more and 0.95 or less, for example, it is 0.65 or more and 0.9 or less, and for example, it is 0.65 or more and 0.8 or less.

The composite oxide further includes a tetravalent element (B) as a B-site element. It is conceivable that, when Co and/or Fe mainly has a valence of 3 or 2 as a B-site element in the composite oxide, if a tetravalent element is additionally introduced, divalent strontium at the A-site can be stabilized. Accordingly, it is possible to inhibit diffusion of divalent strontium at the A-site. The tetravalent element is included in the perovskite-type composite oxide so as to substitute some Co and/or Fe which are other B-site element.

An additional tetravalent element(s) at the B-site is not particularly limited, and is, for example, one or more selected from the group consisting of titanium (Ti), zirconium (Zr) and cerium (Ce). The tetravalent element content at the B-site in the strontium-containing perovskite-type composite oxide is not particularly limited, and is set such that, in addition to ratios of Ln and Sr at the A-site and Co and Fe which are other elements at the B-site, solid phase diffusion of Sr during firing of the oxygen electrode or operating of the cell can be inhibited.

The value of z, which is the tetravalent element content at the B-site, is not particularly limited, but is, the lower limit is, for example, greater than 0, for example, 0.005 or more, for example, 0.01 or more, for example, 0.02 or more, for example, 0.03 or more, for example, 0.05 or more, for example, 0.06 or more. Further, the upper limit is, for example, 0.30 or less, for example, 0.25 or less, for example, 0.20 or less, for example, 0.15 or less, or for example, 0.25 or less, or for example 0.10 or less.

Among them, for titanium and zirconium, the lower limit of z is, for example, 0.01 or more, for example, 0.02 or more, or for example, 0.03 or more, or for example, 0.04 or more, for example, 0.05 or more, or for example, 0.06 or more, or for example, 0.10 or more. The upper limit of z is, for example, 0.30 or less, for example, 0.25 or less, for example, 0.20 or less, or for example, 0.10 or less, or for example, 0. 15 or less. The range of z for titanium and zirconium can be set by appropriately combining these lower and upper limits, and is, for example, 0.01 or more and 0.30 or less, or, for example, 0.02 or more and 0.30 or less, for example, 0.03 or more and 0.25 or less, or for example, 0.03 or more and 0.20 or less, or 0.05 or more and 0.2 or less, or for example, 0.05 or more 0.15 or less. Further, for example, it is 0.06 or more and 0.20 or less, or for example, it is 0.06 or more and 0.15 or less, or for example, it is 0.10 or more and 0.15 or less.

In addition, the value of 1-z, which is a total amount of Co and Fe at the B-site, and the value of z, which is the tetravalent element content at the B-site, can be set so that, for example, z/(1-z) is 0.01 or more and 0.40 or less. When the above ratio is set to be within this range, it is possible to inhibit the formation of SrZrO₃ under firing conditions for the oxygen electrode using this strontium-containing perovskite-type composite oxide and/or under cell operation conditions.

The lower limit of the above ratio is, for example, 0.02 or more, for example, 0.03 or more, for example, 0.04 or more, for example, 0.05 or more, for example, 0.06 or more, for example, 0.07 or more, for example, 0.08 or more, for example, 0.09 or more, for example, 0.10 or more, for example, 0.11 or more, for example, 0.12 or more, for example, 0.13 or more, for example, 0.14 or more, or for example, 0.15 or more. The upper limit of the above ratio is, for example, less than 0.40, for example, 0.39 or less, for example, 0.38 or less, for example, 0.37 or less, for example, 0.36 or less, for example, 0.35 or less, for example, 0.30 or less, for example, 0.25 or less, or for example, 0.20 or less.

The above preferable range can be set by being appropriately selected from the above lower limits and upper limits. Typically, the preferable range is, for example, 0.01 or more and less than 0.4, for example, 0.39 or less, for example, 0.01 or more and 0.38 or less, for example, 0.03 or more and 0.38 or less, for example, 0.03 or more and 0.30 or less, for example, 0.03 or more and 0.25 or less, for example, 0.03 or more and 0.20 or less, for example, 0.04 or more and 0.38 or less, for example, 0.04 or more and 0.30 or less, for example, 0.04 or more and 0.25 or less, or for example, 0.04 or more and 0.20 or less.

The above ratios may be significant, for example, when the composite oxide includes Fe, and the value of x for the Sr content is, for example, 0.2 or more and 0.8 or less, for example, 0.3 or more and 0.7 or less, for example, 0.3 or more and 0.6 or less, for example, 0.3 or more and 0.5 or less, or for example, 0.4, and the value of 1-y-z for the Co content is, for example, 0.05 or more and 0.65 or less, for example, 0.1 or more and 0.6 or less, for example, 0.1 or more and 0.3 or less, or for example, 0.2.

According to the above description, the composite oxide may have, for example, a form in which a (La, Sr) (Co, Fe) O₃-based composite oxide (LSCF) containing La (lanthanum)·Sr (strontium) Co (cobalt)·Fe (iron) includes a tetravalent element at the B-site, a form in which a (La, Sr) CoOs-based composite oxide containing LaSrCo (hereinafter sometimes referred to as "LSC") includes a tetravalent element at the B-site, and a form in which a (Sr, Sm) CoO₃-based composite oxide containing SrSmCo (hereinafter sometimes referred to as "SSC") includes a tetravalent element Ti and/or Zr at the B-site.

For the LSCF, for example, the value of x for the Sr content is 0.25 or more and 0.55 or less, the value of 1-y-z for the Co content is 0.05 or more and 0.3 or less, the value of y for the Fe content is 0.5 or more and 0.9 or less, and the value of z for the tetravalent element at the B-site may be in the above range for Ti and/or Zr, such as greater than 0 and 0.30 or less.

For the SSC, the value of x for the Sr content and the Sm content is 0.3 or more and 0.6 or less, or for example, 0.4 or more and 0.5 or less, the value of 1-y-z for the Co content is 0.7 or more and less than 1, the value of y for the Fe content is 0, and the value of z for the tetravalent element at the B site may be in the above range, such as greater than 0 and 0.30 or less. In addition, for LSC, the value of x for the Sr content and the La content is 0.1 or more and 0.8 or less, or for example, 0.2 or more and 0.7 or less, the value of 1-y-z for the Co content is 0.7 or more and less than 1, the value of y for the Fe content is 0, and the value of z for the tetravalent element at the B site may be in the above range for Ti and/or Zr, such as greater than 0 and 0.30 or less.

Further, when the tetravalent element at the B site is cerium, the lower limit of the value of z is, for example, greater than 0, 0.005 or more, for example, 0.01 or more, for example, 0.02 or more, for example, 0.03 or more, for example, 0.04 or more, for example, 0.05 or more, for example, 0.06 or more. The upper limit of z for cerium is, for example, 0.15 or less, for example, 0.14 or less, for example, 0.13 or less, for example, 0.12 or less, and for example, 0 .10 or less, for example, for example, 0.09 or less, for example, 0.08 or less, for example, 0.07 or less, for example, 0.06 or less, for example, 0.05 or less, for example, 0.04 or less, for example, 0.03 or less, for example, 0.02 or less, for example, 0.01 or less. The range of the z value for cerium can be set by appropriately combining these lower and upper limits. For example, greater than 0 and 0.10 or less, for example, 0.005 or more and 0.08 or less, for example, 0.01 or more and 0.08 or less, for example, 0.005 or more and 0.06 or less, or for example, 0.01 or more and 0.06 or less, for example, 0.005 or more and 0.06 or less 0.05 or less, for example, 0.01 or more and 0.05 or less, for example, 0.005 or more and 0.04 or less, for example, 0.01 or more and 0.04 or less, for example, 0.005 or more and 0.03 or less, for example, 0.01 or more and 0.03 or less, for example, 0.005 or more and 0.02 or less, for example, 0.01 or more and 0.02 or less and so on.

In addition, the value of 1-z, which is a total amount of Co and Fe at the B-site, and the value of z, which is the tetravalent element content at the B-site, can be set so that, for example, z/(1-z) is 0.005 or more and 0.18 or less. When the above ratio is set to be within this range, it is possible to inhibit the formation of SrZrO₃ under firing conditions for the oxygen electrode using this strontium-containing perovskite-type composite oxide and/or under cell operation conditions.

The lower limit of the ratio is also, for example, 0.005 or more, for example, 0.01 or more, for example, 0.02 or more, for example, 0.03 or more, for example, 0.04 or more, for example, 0.05 or more, for example, 0.06 or more. The upper limit of the ratio is, for example, 0.18 or less, for example, 0.17 or less, for example, 0.16 or less, for example, 0.15 or less, for example, 0.14 or less, for example, 0.13 or less, for example, 0.12 or less, for example, 0.11 or less, for example, 0.10 or less, for example, 0.09 or less, for example 0.08 or less, for example 0.07 or less, for example 0.06 or less, for example 0.05 or less, for example 0.04 or less, for example, 0.03 or less, for example, 0.02 or less.

The above preferable range can be set by appropriately selecting from the above lower limit and upper limit. Typically, for example, greater than 0 and 0.18 or less, for example, 0.005 or more and 0.18 or less, for example, 0.01 or more and 0.18 or less, for example, 0.03 or more and 0.18 or less, for example, 0.06 or more and 0.18 or less, for example, 0.005 or more and 0.11 or less, for example, 0.01 or more and 0.11 or less, further, for example, 0.03 or more and 0.11 or less, for example, 0.06 or more and 0.11 or less, or for example, 0.005 or more and 0.06 or less, for example, 0.01 or more and 0.06 or less, for example, 0.03 or more and 0.06 or less, for example, 0.005 or more and 0.03 or less, for example, 0.01 or more and 0.03 or less, for example, 0.005 or more and 0.02 or less, for example, 0.01 or more and 0.02 or less, for example, 0.005 or more and 0.01 or less.

The above ratios may be significant, for example, when the composite oxide includes Fe, and the value of x for the Sr content is, for example, 0.2 or more and 0.8 or less, for example, 0.3 or more and 0.7 or less, for example, 0.3 or more and 0.6 or less, for example, 0.3 or more and 0.5 or less, or for example, 0.4, and the value of 1-y-z for the Co content is, for example, 0.05 or more and 0.65 or less, for example, 0.1 or more and 0.6 or less, for example, 0.1 or more and 0.3 or less, or for example, 0.2.

According to the above description, the composite oxide may have, for example, a form in which a (La, Sr)(Co, Fe) O₃-based composite oxide (LSCF) containing La (lanthanum) Sr (strontium)·Co (cobalt)·Fe (iron) includes a tetravalent element at the B-site, a form in which a (La, Sr)CoO₃-based composite oxide containing LaSrCo (hereinafter sometimes referred to as "LSC") includes a tetravalent element at the B-site, and a form in which a (Sr, Sm)CoO₃-based composite oxide containing SrSmCo (hereinafter sometimes referred to as "SSC") includes a tetravalent element Ce at the B-site.

For the LSCF, for example, the value of x for the Sr content is 0.25 or more and 0.55 or less, the value of 1-y-z for the Co content is 0.05 or more and 0.3 or less, the value of y for the Fe content is 0.5 or more and 0.9 or less, and the value of z for the tetravalent element at the B-site may be in the above range for Ce, such as more than 0 and 0.15 or less.

For the SSC, the value of x for the Sr content and the Sm content is 0.3 or more and 0.6 or less, or for example, 0.4 or more and 0.5 or less, the value of 1-y-z for the Co content is 0.7 or more and less than 1, the value of y for the Fe content is 0, and the value of z for the tetravalent element at the B site may be in the above range for Ce, such as greater than 0 and 0.15 or less. In addition, for LSC, the value of x for the Sr content and the La content is 0.1 or more and 0.8 or less, or for example, 0.2 or more and 0.7 or less, the value of 1-y-z for the Co content is 0.7 or more and less than 1, the value of y for the Fe content is 0, and the value of z for the tetravalent element at the B site may be in the above range for Ce, such as more than 0 and 0.15 or less.

In addition, the oxygen electrode may contain, as an oxygen electrode material, a compound having a perovskite structure represented by General Formula ABO_{3-δ} in addition to the composite oxide. Here, A is one, two or more selected from the group consisting of Sr, Sm, La and Ca, B is one, two or more selected from the group consisting of Mn, Co, Fe and Ni, and δ is a value that is determined to satisfy charge neutrality conditions. A may contain at least Sr. More specifically, in addition to the LSCF, LSC, and SSC, a (La, Sr, Ca) MnO₃-based composite oxide containing La·Sr·Ca·Mn, a (La, Sr) MnO₃-based composite oxide containing La·Sr·Mn, and the like may be exemplified. These may be used alone, or two or more thereof may be used in combination. Here, δ varies depending on the type of atoms that substitute a part of the perovskite structure, but typically, 0≤δ<1.

Such an oxygen electrode material can be synthesized by various known methods. For example, it can be synthesized by a spray pyrolysis method. According to the spray pyrolysis method, it is possible to control the shape, the particle size and the like, and it is possible to obtain a powder suitable for forming a porous sintered component. For example, the composite oxide can be obtained by preparing a raw material solution by mixing raw materials so as to obtain a desired ratio, and with a spray pyrolysis device, for example, setting the temperature of the reaction tube to 200°C, 400°C, 800°C, and 1,000°C from the side closest to an atomizer, and firing a raw material solution that has been made into droplets by the atomizer using a carrier gas such as air at an appropriate flow rate. The raw materials used for producing the composite oxide are typically nitrates of various metals or hydrates thereof. Here, as raw materials for Ti, Zr and Ce which are tetravalent elements at the B-site, it is possible to use a titanium oxide sol and a zirconyl nitrate dihydrate solution, a zirconium oxide sol and/or cerium nitrate hexahydrate.

Although it is not particularly limited, the average particle size of the oxygen electrode material powder is, for example, 20 µm or less, for example, 0.01 µm or more and 10 µm or less, for example, 0.05 µm or more and 10 µm or less, for example, 0.1 µm or more and 5 µm or less, for example, 0.2 µm or more and 3 µm or less, for example, 0.5 µm or more and 2 µm or less, or for example, 1 µm or more and 2 µm or less. In the disclosure herein, the average particle size can be determined based on morphological observation under an optical microscope. As a device for measuring the average particle size, for example, Morphlogi4 (commercially available from Malvern Panalytical Ltd.) is used, and for example, using a 50x objective lens, the average particle size can be calculated according to the particle size measurement protocol bundled in the device. Here, in the disclosure herein, the average particle size is a particle size at a cumulative value of 50% in the number-based particle size distribution.

The oxygen electrode is provided as a porous sintered component. The oxygen electrode can be obtained independently or as a part of the cell by mixing the aforementioned oxygen electrode materials, with a solid electrolyte material to be described below added as necessary, additionally performing molding, film-forming or laminating using a sintering aid, a pore-forming material or the like, and then performing firing. The thickness of the oxygen electrode may be appropriately determined according to the structure of the cell and the like, and is not particularly limited, and in the case of an electrolyte supported type cell or a hydrogen electrode supported type cell, the thickness is, for example, 5 µm or more and 200 µm or less, or for example, 20 µm or more and 50 µm or less. In addition, in the case of an oxygen electrode supported type cell, the thickness is, for example, 0.5 mm or more and 2 mm or less. In addition, in the case of a metal supported type, the thickness is, for example, 5 µm or more and 200 µm or less. Here, the heating temperature in the firing process for sintering an oxygen electrode is, for example, 650°C or higher and 1,350°C or lower, or for example, 1,000°C or higher and 1,250°C or lower. In addition, the heat treatment time is, for example, 0.5 hours or more and 24 hours or less, for example, 1 hour or more and 5 hours or less. In addition, since a method of producing a laminate for a solid oxide electrochemical cell is well known to those skilled in the art, description thereof will be omitted.

### Solid Electrolyte

The solid electrolyte contains zirconium oxide. Zirconium oxide is not particularly limited, and stabilized or partially stabilized zirconium oxide may be exemplified. The metal doped for stabilizing zirconium oxide is not particularly limited, and examples thereof include calcium (calcium oxide) and magnesium (magnesium oxide) as well as rare earths such as yttrium (yttrium oxide), scandium (scandium oxide), and the like. Although the doping amount is not particularly limited, it can be such as 6 mol% or more and 10 mol% or less as a metal oxide with respect to zirconia.

The solid electrolyte is provided as a dense sintered component. It can be obtained by molding, film-forming, laminating, firing and sintering zirconium oxide. The thickness of the solid electrolyte may be appropriately determined according to the structure of the cell and the like, and is not particularly limited, and in the case of a solid electrolyte supported type cell, the thickness is, for example, 0.1 mm or more and 1 mm or less. In addition, in the case of an oxygen electrode supported type cell or a hydrogen electrode supported type cell, the thickness is, for example, 0.5 µm or more and 100 µm or less. Here, the heating temperature in the firing process for sintering a solid electrolyte are, for example, 700°C or higher and 1,500°C or lower, or for example, 1,200°C or higher and 1,450°C or lower. In addition, the heat treatment time is, for example, 0.5 hours or more and 24 hours or less, or for example, 1 hour or more and 6 hours or less. In addition, since a method of producing a laminate for a solid oxide electrochemical cell is well known to those skilled in the art, description thereof will be omitted.

### Hydrogen Electrode

The hydrogen electrode contains conventionally known materials as the hydrogen electrode material for the solid oxide electrochemical cell. Examples thereof include metals composed of nickel (Ni), copper (Cu), gold (Au), platinum (Pt), palladium (Pd), ruthenium (Ru), other platinum group elements, cobalt (Co), lanthanum (La), strontium (Sr), titanium (Ti) and the like, and/or metal oxides composed of one or more of metal elements. These may be used alone, or two or more thereof may be used. Here, in addition to these metal oxides as catalysts, stabilized or partially stabilized zirconia or rare-earth-doped ceria, which is a solid electrolyte material, can be mixed and used. Although it is not particularly limited, a mass ratio of metal oxide/solid electrolyte may be, for example, 5/5 to 8/2. Here, the metal oxide is reduced to a metal at the hydrogen electrode when operated as an SOEC and an SOFC.

The hydrogen electrode is provided as a porous sintered component. The hydrogen electrode can be obtained by mixing such hydrogen electrode materials, performing molding, film-forming or laminating using a sintering aid, a pore-forming material or the like as necessary, and then performing firing. The thickness of the hydrogen electrode may be appropriately determined according to the structure of the cell and the like, and is not particularly limited, and in consideration of durability, a coefficient of thermal expansion and the like, in the case of a solid electrolyte supported type cell or an oxygen electrode supported type cell, the thickness is, for example, 5 µm or more and 200 µm or less, or for example, 20 µm or more and 50 µm or less. In addition, in the case of a hydrogen electrode supported type cell, the thickness is, for example, 0.5 mm or more and 2 mm or less. Here, the heating temperature and time in the firing process for sintering a hydrogen electrode are the same as those for the solid electrolyte, and additionally, since a method of producing a laminate for a solid oxide electrochemical cell is well known to those skilled in the art, description thereof will be omitted.

The cell may include an interlayer between the solid electrolyte and the oxygen electrode. The interlayer may contain, for example, a rare-earth-doped cerium oxide. The rare-earth-doped cerium oxide is not particularly limited, and gadolinium-doped cerium oxide (GDC), lanthanum-doped cerium oxide (LDC), samarium-doped cerium oxide (SDC) and yttrium-doped cerium oxide (YDC) may be exemplified. These cerium oxides may be used alone, or two or more thereof may be used in combination.

The interlayer is provided as a dense sintered component or a porous sintered component. The interlayer can be obtained by performing molding using a rare-earth-doped cerium oxide to which a sintering aid may be added as necessary, or film-forming or laminating a solid electrolyte, and then performing firing. The thickness of the interlayer may be appropriately determined according to the structure of the cell and the like, and is not particularly limited, and in consideration of durability, a coefficient of thermal expansion and the like, and the thickness is, for example, 100 µm or less, for example, 1 µm or more and 50 µm or less, for example, 1 µm or more and 30 µm or less, or, for example, 1 µm or more and 20 µm or less. Here, the heating temperature and time in the firing process for sintering an interlayer are the same as those for the hydrogen electrode and the like, and additionally, since a method of producing a laminate for a solid oxide electrochemical cell is well known to those skilled in the art, description thereof will be omitted.

In a typical form of the cell, for example, the oxygen electrode contains the strontium-containing perovskite-type composite oxide, the solid electrolyte is a rare-earth-doped zirconium oxide such as YSZ, and the interlayer is GDC.

Such cells can have various forms such as cylindrical or planar forms depending on a desired SOEC or SOFC form. In general, cells are laminated in a plurality of layers via known separators, and further include various gas flow paths, current collectors, cooling devices and the like to form an SOEC or SOFC.

### Oxygen Electrode Material for Solid Oxide Electrochemical Cell

According to the disclosure herein, a material containing the composite oxide is provided as an oxygen electrode material for a solid oxide electrochemical cell. More specifically, the oxygen electrode material contains a composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions). Various forms of the composite oxide as an oxygen electrode material are as already described.

The oxygen electrode material may be a composition that further contains another perovskite-type composite oxide in addition to the strontium-containing perovskite-type composite oxide. In addition, the composition containing an oxygen electrode material may have, for example, a form of a slurry for screen printing on a solid electrolyte or the like. The slurry may contain an appropriate solvent, sintering aid, and pore-forming material. In addition, the oxygen electrode material may have a form of a thin film or unsintered molded component. In addition, the oxygen electrode material may have a form in which the oxygen electrode material itself is a porous sintered component.

### Method of Producing Solid Oxide Electrochemical Cell

According to the disclosure herein, there is provided a method including a process of preparing a cell including an oxygen electrode containing the strontium-containing perovskite-type composite oxide, an interlayer containing a rare-earth-doped cerium oxide, a solid electrolyte containing zirconium oxide and a hydrogen electrode. In this method, when a cell including an oxygen electrode having a predetermined composition and an interlayer is acquired, in the firing process for sintering once, twice or more in the acquisition process, it is possible to inhibit the formation of a high resistance phase between the solid electrolyte and the interlayer due to thermal diffusion of strontium.

The order of laminating an oxygen electrode, an interlayer, a solid electrolyte and a hydrogen electrode and preparation of each layer are not particularly limited, and a cell can be acquired according to a known solid electrolyte electrochemical cell production method.

Here, according to the disclosure herein, there is provided a method of applying a separator to such one, two or more cells, additionally applying a hydrogen, oxygen or water vapor gas flow path, an electrode and a current collector, and producing an SOEC and an SOFC and a system including these. Here, those skilled in the art can appropriately apply such elements to a single cell to form an SOEC or an SOFC, and additionally construct a system.

### Solid Oxide Electrochemical Device

According to the disclosure herein, there is provided an electrochemical device including a solid oxide electrochemical cell disclosed herein. In the cell, thermal diffusion of Sr due to heating is inhibited at least during cell production or stack production, and the formation of a high resistance phase between the solid electrolyte and the interlayer is inhibited. This allows the device to operate efficiently as an electrochemical device. The device generally includes a stack in which two or more cells are laminated with separators therebetween. Examples of such devices include SOECs and SOFCs.

### Examples

Hereinafter, examples will be described as specific examples in order to more specifically describe the disclosure herein. The following examples are provided to describe the disclosure herein, but do not limit the scope thereof.

### Example 1

### Preparation of Raw Material Powder for Cell Element

Raw material powders for an oxygen electrode and a hydrogen electrode were synthesized by the following method. GDC(Ce_{0.8}Gd_{0.2})O₂₋ₓ, (commercially available from Shin-Etsu Chemical Co., Ltd.) was prepared as the raw material powder for the interlayer.

### Synthesis of Raw Material Powder for Oxygen Electrode and Hydrogen Electrode

Raw material powders for an oxygen electrode and a hydrogen electrode were produced by a spray pyrolysis method.

### Oxygen Electrode Raw Material Powder

As an oxygen electrode raw material powder, (La_{0.6}Sr_{0.4})(Co_{0.2}Fe_{0.8-x}Tiₓ)O_{3-δ} (x="0", "0.01", "0.03", "0.06", "0.09", "0.15", and "0.31", where, x in this formula corresponds to z in the composition formula of the composite oxide disclosed in the disclosure herein) was synthesized by a spray pyrolysis method. Using lanthanum nitrate hexahydrate, strontium nitrate, cobalt nitrate hexahydrate, iron nitrate nonahydrate and sol of titanium dioxide, a raw material solution was prepared using deionized water so that lanthanum, strontium, cobalt, iron and titanium had the above composition. In this raw material solution, the molar concentration of all cations was 0.4 mol/L. This raw material solution was subjected to a spray pyrolysis method under the following conditions to obtain a desired raw material powder.

### Spray Pyrolysis Condition

For spray pyrolysis, a spray pyrolysis device (commercially available from O.N General Electric Co., Ltd.) was used. This device was composed of an atomizer made of a vinyl chloride resin, a reaction tube made of an alumina (an inner diameter of 20 mm, an outer diameter of 25 mm, and a length of 1,500 mm) and a glass collector. In addition, the reaction tube part includes four independent heating furnaces (Kanthal heater). A membrane filter (142 mmϕ, pore size: 0.45 µm, Omnipore JHWP14225) was set in a collector to collect synthesized particles.

In spray pyrolysis synthesis conditions, the temperature of the reaction tube was set to 200°C, 400°C, 800°C, and 1,000°C from the side closest to the atomizer, and in order to prevent condensation, the collector was kept at 100°C using a mantle heater. The ultrasonic atomizer water bath temperature was 30°C, and the solution container temperature was 27°C. The carrier gas flow rate during synthesis was 3.0 L/min. Here, Air was used as a carrier gas.

### Hydrogen Electrode Raw Material Powder

As a hydrogen electrode raw material powder, NiO-YSZ (ZrO₂-8 mol% Y₂O₃) (NiO:YSZ=6:4 (mass ratio)) was synthesized by a spray pyrolysis method. Using nickel acetate tetrahydrate, yttrium nitrate n-hydrate, and zirconium nitrate dihydrate, a raw material solution was prepared using deionized water so that nickel, yttrium, and zirconium had the above composition. In this raw material solution, the molar concentration of all cations was 0.45 mol/L. This raw material solution was subjected to a spray pyrolysis method under the same conditions as above to obtain a desired raw material powder.

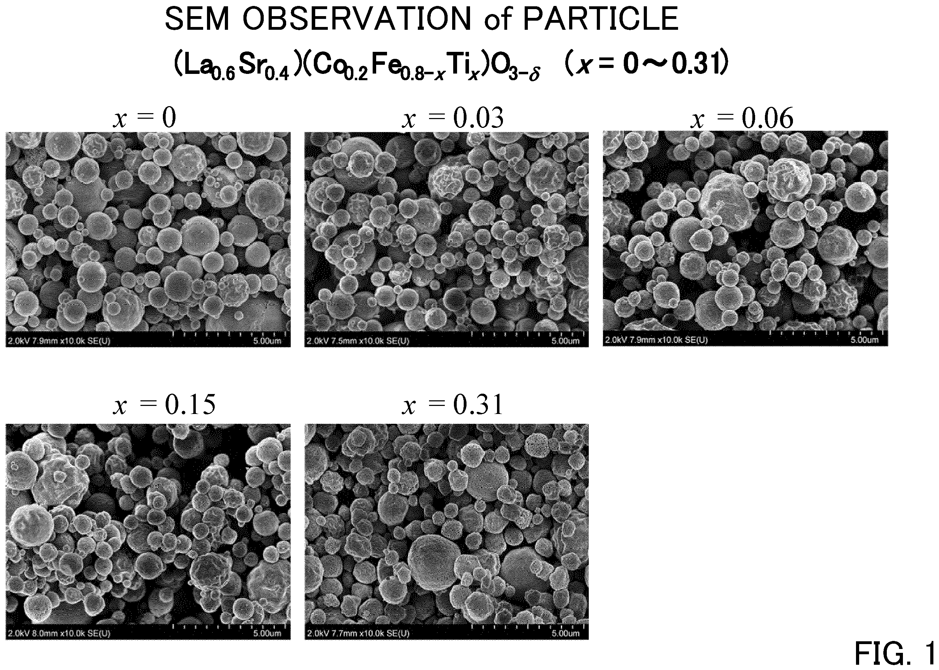

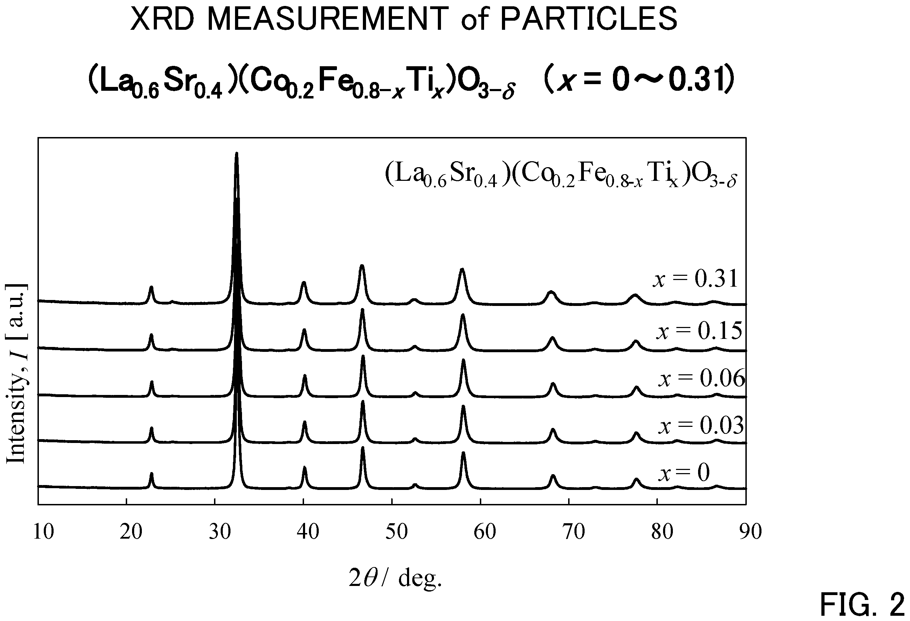

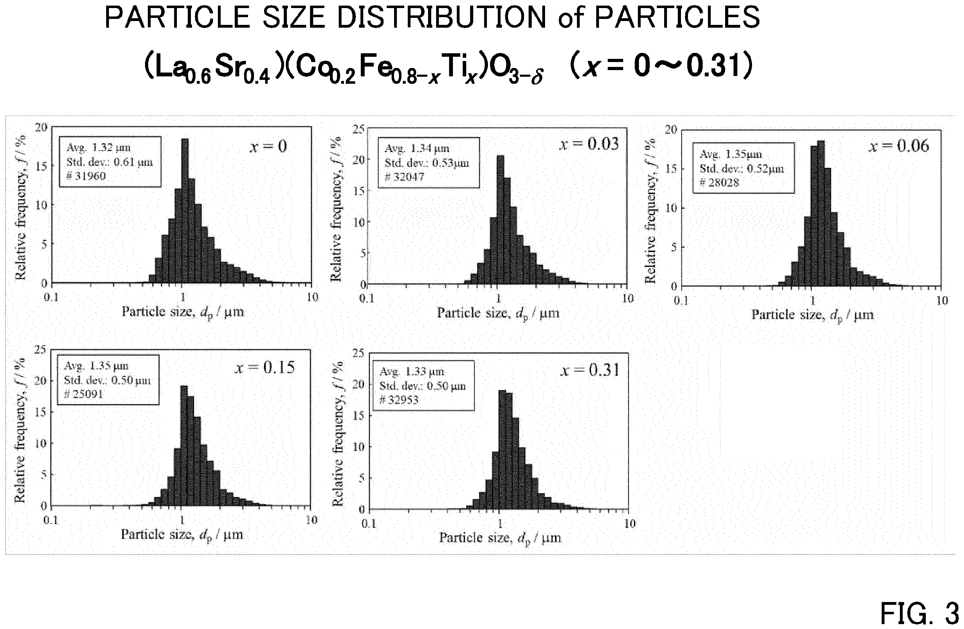

FIG. 1 shows, SEM observation results, FIG.2 shows the measurement results obtained through XRD for the various obtained oxygen electrode raw material powders and FIG. 3 shows the measurement results of the particle size distribution. Here, regarding the particle size distribution, according to a particle size distribution measurement device (Morphlogi4, commercially available from Malvern Panalytical Ltd.) using an optical microscope, the particle size at a cumulative value of 50% in a number-based particle size distribution obtained by measuring the particle diameter in a field of view obtained using an objective lens with a magnification of 50 is shown.

As shown in FIG. 2, all oxygen electrode raw material powders obtained by the spray pyrolysis method exhibited a characteristic X-ray spectrum unique to a desired strontium-containing perovskite-type composite oxide. In addition, as shown in FIG. 1 and FIG. 3, it was found that all oxygen electrode raw material powders were spherical particles that were almost perfect spheres, and powders having an average particle size of 1.32 µm to 1.35 µm and a narrow particle size distribution.

### Example 2

### Production of Single Cell Laminate of Solid Oxide Fuel Cell

The raw material powders prepared in Example 1 and polyethylene glycol (a degree of polymerization of 400) were mixed at a mass ratio of 3:1 to prepare an oxygen electrode slurry, a hydrogen electrode slurry and an interlayer slurry, respectively.

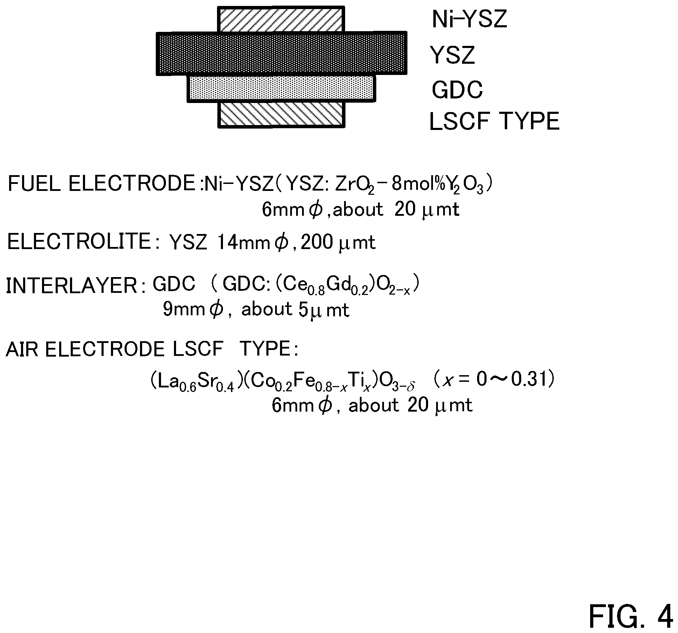

FIG. 4 shows a schema of a single cell laminate produced in this example. For a single cell, a GDC slurry for an interlayer was screen-printed on one surface of a solid electrolyte disk (8YSZ(ZrO₂-8 mol%Y₂O₃), a diameter of 14 mm, a thickness of 200 µm, commercially available from Tosoh Corporation) so that the diameter was 9 mm and the thickness was 5 µm after firing, and a hydrogen electrode slurry was screen-printed on the other surface so that the diameter was 6 mm and the thickness was 20 µm after firing, and firing was performed in the atmosphere at 1,400°C for 2 hours. In addition, various oxygen electrode slurries were additionally screen-printed on the fired interlayer so that the diameter was 6 mm and the thickness was 20 µm after firing, and firing was performed in the atmosphere at 1,150°C for 2 hours. Accordingly, 7 types of laminates (Comparative Production Example and Production Examples 1 to 6 of Group 1) including oxygen electrodes derived from 7 types of slurries with different amounts of Fe substituted with Ti as the oxygen electrode slurry, were produced. The amounts of Ti in 7 types of oxygen electrode slurry were x="0", "0.01", "0.03", "0.06", "0.09", "0.15", and "0.31", respectively, at (La_{0.6}Sr_{0.4})(Co_{0.2}Fe_{0.8-x}Tiₓ)O_{3-σ}, Ti/(Fe+Ti) were "0", "0.0125", "0.0375", "0.0750", "0.1125", "0.1875", and "0.3875", respectively, and Ti/(Co+Fe) were "0", "0.01", "0.03", "0.06", "0.10", "0.18", and "0.45", respectively)

In addition, the following acceleration test was performed to evaluate the long-term durability by making firing conditions and cell operation conditions severe. That is, various oxygen electrode slurries were screen-printed so that the diameter was 6 mm, and the thickness was 20 µm after firing, and then fired in the atmosphere at 1,150°C for 5 hours to produce 7 types of laminates (Comparative Production Example and Production Examples 1 to 6 of Group 2).

Furthermore, similarly, as the acceleration test, various oxygen electrode slurries were screen-printed so that the diameter was 6 mm and the thickness was 20 µm after firing, and then fired in the atmosphere at 1,150°C for 10 hours to produce 7 types of laminates (Comparative Production Example and Production Examples 1 to 6 of Group 3).

### Example 3

### Analysis of Cross Section of Single Cell Using Scanning Electron Microscope (SEM)/Energy Dispersive X-ray Spectroscopy (EDX)

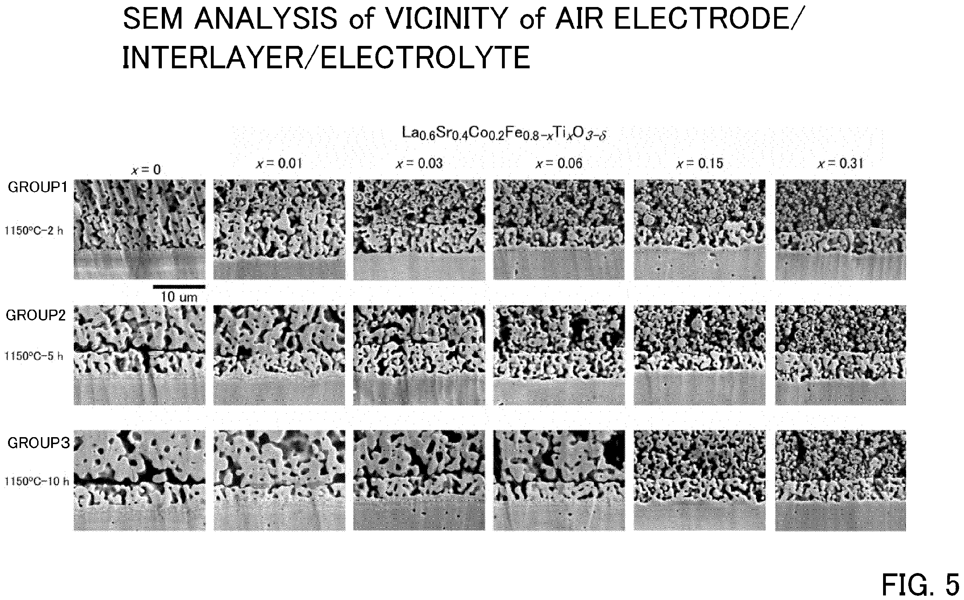

For various laminates excluding some of the laminates produced in Example 2, a cross section in the lamination direction was observed at an acceleration voltage of 15 kV and an observation magnification of 5,000 to 10,000 using SEM (HITACHI SU8000), and the distribution of element (Sr) in the cross section was analyzed using EDX (HORIBA X-max80). The results are shown in FIG. 5 to FIG. 6.

FIG. 5 shows, from the top, SEM observation results of Comparative Production Example and Production Examples 1 to 3 and 5 to 6 of Group 1 (fired at 1,150°C for 2 hours), Group 2 (fired at 1,150°C for 5 hours) and Group 3 (fired at 1,150°C for 10 hours). As shown in FIG. 5, it was found that a porous interlayer and a porous oxygen electrode were formed on the dense solid electrolyte surface.

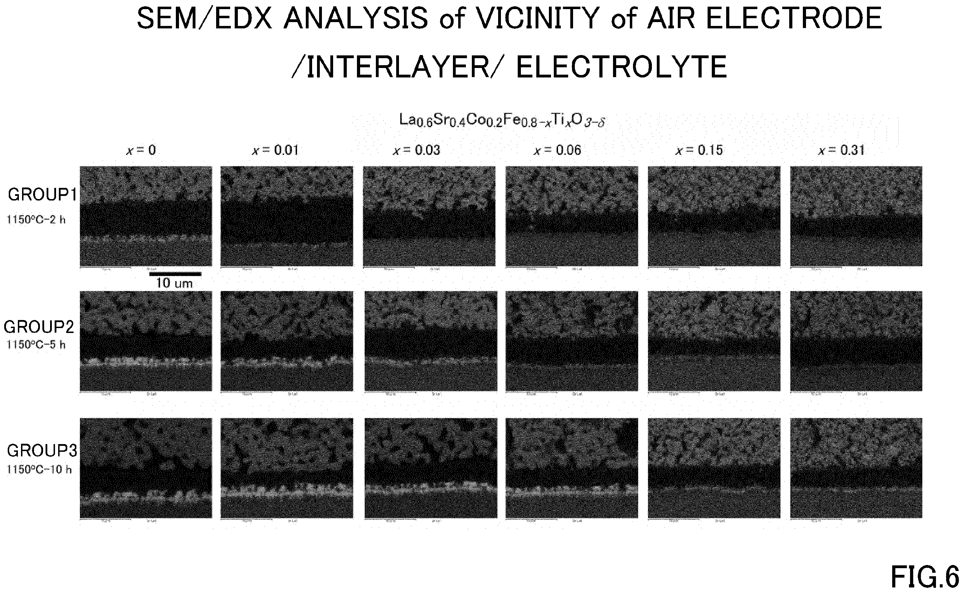

In addition, FIG. 6 shows, from the top, EDX (Sr) observation results of Comparative Production Example and Production Examples 1 to 3 and 5 to 6 of Group 1, Group 2 and Group 3. As shown in FIG. 6, it was found that, in each group, as the amount of substitution with Ti increased, the Sr content at the interface between the solid electrolyte and the interlayer decreased. In addition, it was found that, as the firing time was extended from Group 1 to Group 3, the Sr content (corresponding to SrZrOs) at the interface between the solid electrolyte and the interlayer increased.

Based on the above, it was found that, as the amount of Ti substituted for Fe in the LSCF increased, it was possible to inhibit diffusion of Sr toward the interface between the interlayer and the solid electrolyte and diffusion of Co toward the interlayer. In addition, it was found that it was possible to reduce the Sr content at the interface if it was Production Example 1 (x=0.01, Ti/(Fe+Ti):0.0125, Ti/(Co+Fe):0.01) and it was possible to effectively reduce the Sr (SrZrOs) content if it exceeded Production Example 2 (x=0.03, Ti/(Fe+Ti): 0.0375, Ti/(Co+Fe):0.03). In addition, based on the results of Group 2 and Group 3, it was found that, if it exceeded Production Example 5 ((x=0.15, Ti/(Fe+Ti): 0.1875, Ti/(Co+Fe):0.018): 0.1875), it was possible to clearly inhibit diffusion of Sr excellently, and it was possible to reduce the Sr (SrZrO₃) content and inhibit diffusion of Co.

### Example 4

### Evaluation of Power Generation Property in SOFC Mode of Laminate

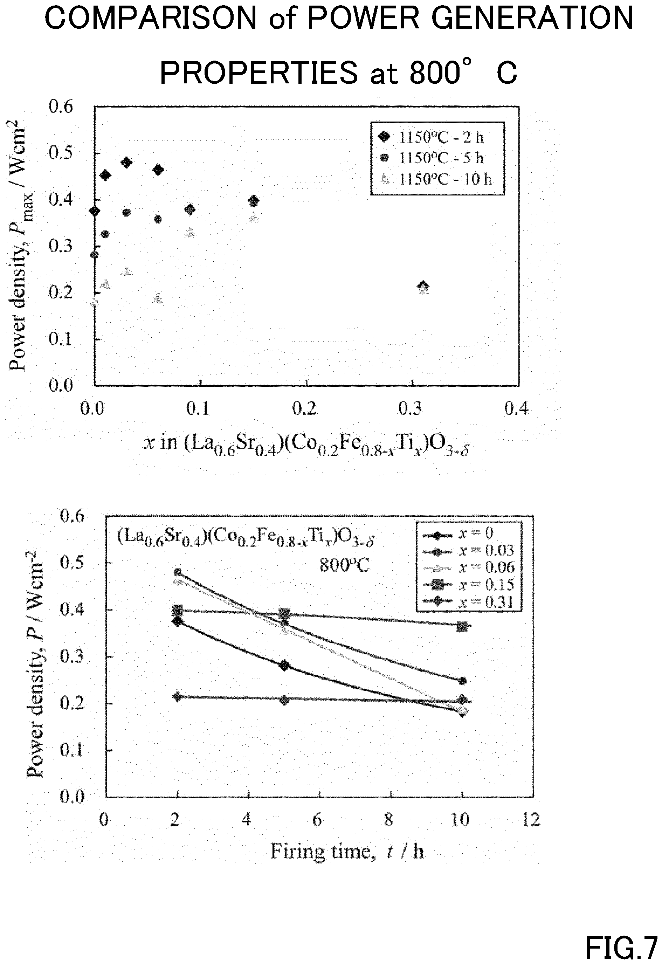

The laminates produced in Example 2 (Groups 1 to 3, Comparative Production Example and Production Examples 1 to 6) were used as SOFC single cells, the operation temperature was set to 800°C, a gas was supplied under conditions in which an air of 50 cm³/min was set on the side of the oxygen electrode and an H₂-3% H₂O of 50 cm³/min was set on the side of the hydrogen electrode, and the maximum power density was measured. The results are shown in FIG. 7.

As shown in FIG. 7, based on the results of Groups 1 to 3, it was found that, in all groups with an amount of Ti substituted amount(x:Ti/(Fe+Ti):Ti/(Co+Fe), hereinafter the amounts are expressed in this order.)from Production Example 1(0.01 :0.0125:0.01)to Production Example 5 (0.15:0.1875:0.18), they exhibited a higher power generation property than the Comparative Production Example containing no Ti. In addition, it was found that, in the range of Production Examples 1 to 3 (0.01∼0.06:0.0125∼0.0750:0.01∼0.06) or Production Examples 2 to 5(0.03∼0.15:0.0375∼0.1875:0.03∼0.18), the maximum power density was exhibited. In addition, based on the results of Groups 1 to 3, it was speculated that, in the range of Production Examples 5 and 6 (0.15∼0.31:0.1875∼0.3875:0.18∼0.45), the maximum power density was lower than the initial maximum power density.

Based on the above, it was found that, when Ti was included in a part of the B-site of a strontium-containing perovskite-type composite oxide of an oxygen electrode composed of a composite oxide containing Sr that thermally diffuses, it was possible to inhibit the formation of SrZrO₃ between the solid electrolyte (YSZ) and the interlayer, and accordingly, it was possible to improve the power generation property in the SOFC mode in some cases.

In addition, accordingly, it was found that, even if this cell was used as an SOEC, it was possible to inhibit the formation of a high resistance phase and it was possible to improve electrolysis efficiency.

### Example 5

### Preparation of Raw Material Powder for Oxygen Electrode Containing Zr as Tetravalent Element at B-Site and Evaluation of Solid Oxide Fuel Cell

The raw material powder for the oxygen electrode was synthesized by the spray pyrolysis method in the same manner as in Example 1 except that (La_{0.6}Sr_{0.4})(Co_{0.2}Fe_{0.8-x}Zrₓ)O_{3-σ}(x="0.15") was synthesized as the raw material powder. Using an aqueous solution containing lanthanum nitrate hexahydrate, strontium nitrate, cobalt nitrate hexahydrate, iron nitrate nonahydrate and zirconyl nitrate dihydrate (zirconyl nitrate), a raw material solution was prepared using deionized water so that lanthanum, strontium, cobalt, iron and zirconium had the above composition.

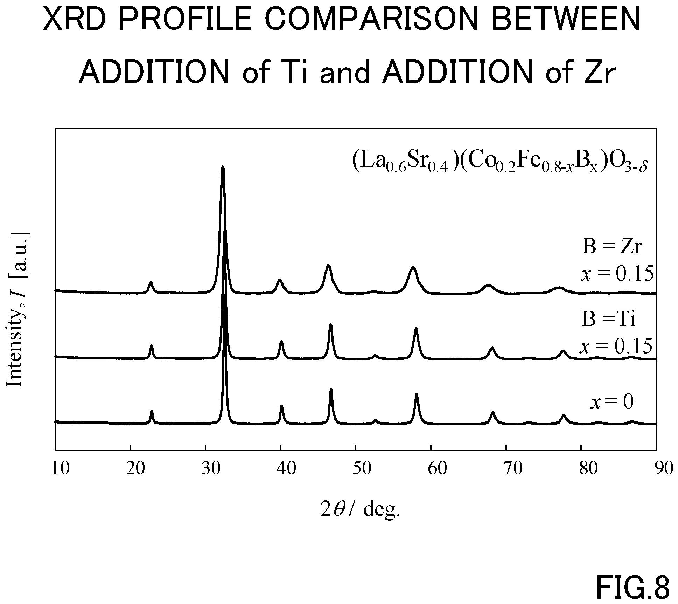

FIG. 8 shows the measurement results obtained through XRD for the obtained oxygen electrode raw material powder of this example. Here, in addition, the measurement results of the raw material powder for the oxygen electrode containing Ti in the same ratio (x=0.15) as that (x=0.15) of this example produced in Example 1 are also shown.

As shown in FIG. 8, the oxygen electrode raw material powder obtained by the spray pyrolysis method exhibited a characteristic X-ray spectrum unique to a desired strontium-containing perovskite-type composite oxide.

Next, using this oxygen electrode material and other raw material powders prepared in Example 1, slurries for respective examples were produced, and a single cell laminate was produced according to Example 2. Here, the firing conditions were 1,150°C and 2 hours.

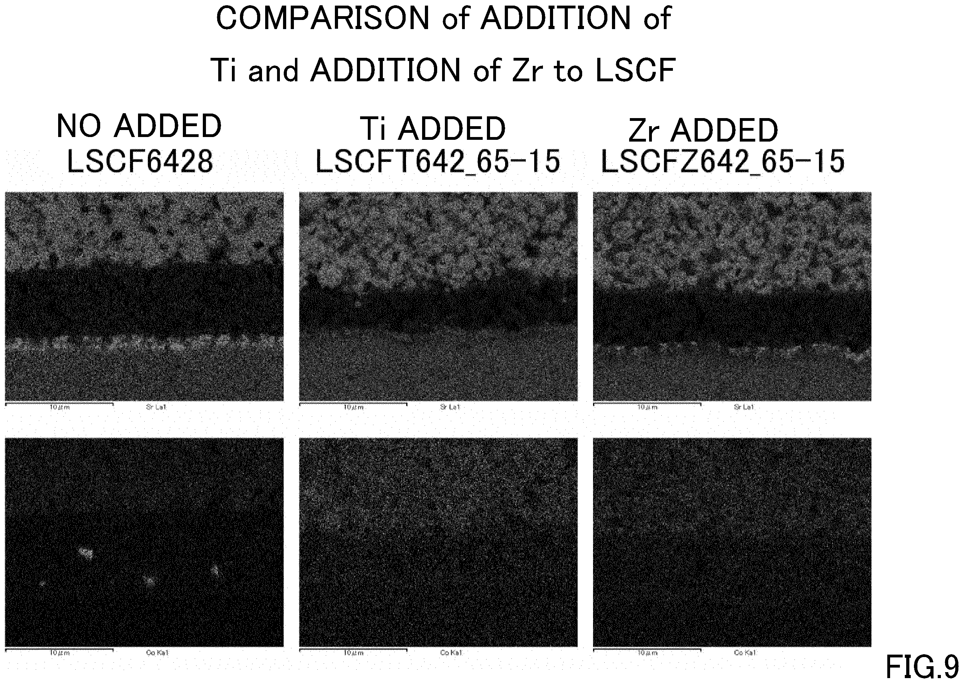

For this laminate, the cross section of the single cell was analyzed by EDX according to Example 3 and the Sr distribution was analyzed. The results are shown in FIG. 9. FIG. 9 also shows the measurement results of single cell laminates produced in the same manner using the oxygen electrode material containing Ti in the same ratio (x=0.15) as this example and the oxygen electrode material with x=0.

As shown in FIG. 9, it was found that, even if a composite oxide containing Zr was used, the Sr content at the interface between the solid electrolyte and the interlayer was reduced, compared to an oxygen electrode material containing no Zr (x=0). Based on the above, it was found that Zr was also effective as the tetravalent element at the B site.

### Example 6

In this example, 1-y-z for Co content in Ln₁₋ₓSrₓCo_{1-y-z}Fe_{y}B_{z}O_{3-δ} is 1-y-z=0.2 (1-y-z=0.2 , y = 0.8, z = 0 to 0.32) ,1-y-z = 0.1 (1-y-z = 0.1, y = 0.9, z = 0 to 0.15), and 0.05 (1-y-z = 0.05, y = 0.95, z = 0 to 0.15) were also prepared according to Example 1. Further according to Example 2, single cell laminates were prepared by firing at 1150 ° C. for 2 hours, 5 hours and 10 hours. Analysis was performed by an Energy Dispersive X-ray spectroscopy (EDX) (not shown).

As a result, even when the Co content (1-y-z) was 0.05 and 0.1, it was found that the Sr content at the interface between the solid electrolyte and the interlayer decreased. It was also found that the content of Sr decreased to the same extent as the amount of Co of 0.2 even when the amount of Co was 0.05 and 0.01.

### Example 7

### Preparation of Raw Material Powder for Oxygen Electrode Containing Ce as B-site Tetravalent Element and Evaluation in Solid Oxide Fuel Cell

(La_{0.6}Sr_{0.4})(Co_{0.2}Fe_{0.8-x}CeₓO_{3-δ} (x="0", "0.005", "0.01", "0.03", "0.06",and "0.15", where, x in this formula corresponds to z in the composition formula of the composite oxide disclosed in the disclosure herein) was synthesized by a spray pyrolysis method. Using lanthanum nitrate hexahydrate, strontium nitrate, cobalt nitrate hexahydrate, iron nitrate nonahydrate, and cerium nitrate hexahydrate is added to deionized water so that lanthanum, strontium, cobalt, iron, and cerium have the above composition. In this raw material solution, the number of moles of all cations was 0.4 mol/L. This raw material solution was subjected to spray pyrolysis under the same conditions as in Example 1 to obtain the desired raw material powder.

The oxygen electrode material powder prepared in this example and polyethylene glycol (a degree of polymerization of 400) were mixed at a mass ratio of 3:1 to prepare an oxygen electrode slurry.

Single cell laminates were produced in the same manner as in Example 2, except that the oxygen electrode slurry produced in this example was used as the oxygen electrode slurry. In this way, 6 types of slurries having different substitution amounts of Fe substituted with Ce were produced. 6 types of laminates (comparative production example and production examples 1 to 5 of group 4) having oxygen electrodes derived from 6 types of slurries were produced. The amounts ot Ce in these six slurries were x="0", "0.005", "0.01", "0.03", "0.06", and "0.15", respectively and Ce/(Fe+Ce) were "0", "0.00625", " 0.0125", "0.0375", "0.0750" and "0.1875", respectively and Ce/(Co+Fe) were 0.01, 0.005, 0.03, 0.06 and 0.18, respectively.

In addition, the following acceleration test was performed to evaluate the long-term durability by making firing conditions and cell operation conditions severe. That is, various oxygen electrode slurries were screen-printed so that the diameter was 6 mm, and the thickness was 20 µm after firing, and then fired in the atmosphere at 1,150°C for 5 hours to produce 5 types of laminates (Comparative Production Example and Production Examples 2 to 5 of Group 5).

Furthermore, similarly, as the acceleration test, various oxygen electrode slurries were screen-printed so that the diameter was 6 mm and the thickness was 20 µm after firing, and then fired in the atmosphere at 1,150°C for 10 hours to produce 6 types of laminates (Comparative Production Example and Production Examples 1 to 5 of Group 6).

### Example 8

### Analysis of Cross Section of Single Cell Using SEM and EDX

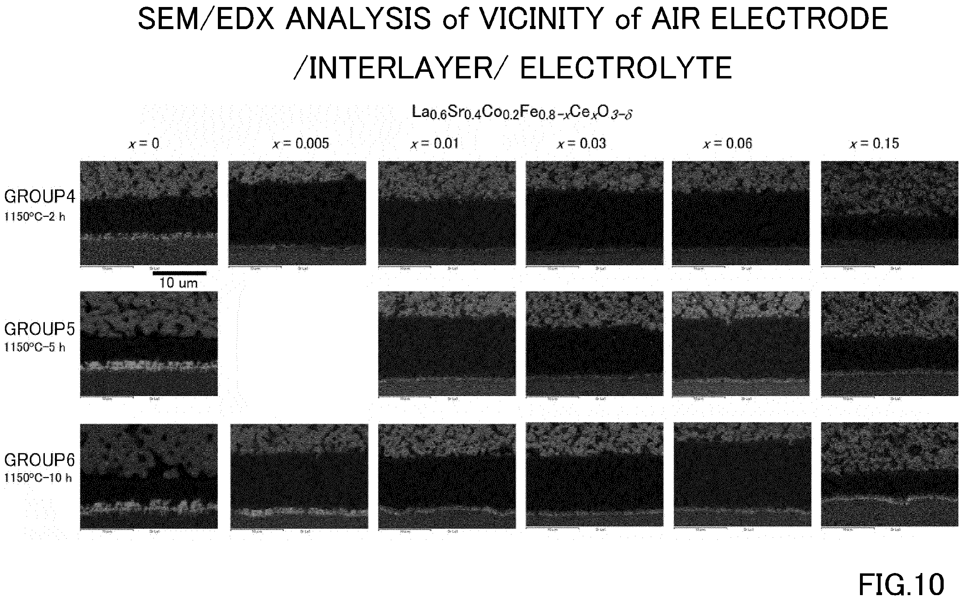

For various laminates produced in Example 6, according to Example 3, the distribution of element (Sr) in the cross section was analyzed using SEM(HITACHI SLJ8000) and EDX (HORIBA X-max80). The results are shown in FIG. 10.

FIG. 10 shows the observation results for SEM/EDX (Sr) of Group 4 (fired at 1150°C for 2 hours), group 5 (fired at 1150°C for 5 hours), and Group 6 (fired at 1150°C for 10 hours) from the top. As shown in FIG. 10, in each Groups, even when the amount of substitution with Ce was x=0.005, the amount of Sr at the interface between the solid electrolyte and the interlayer was smaller than that of no addition. Also, at x=0.01, the amount of Sr was sufficiently reduced.

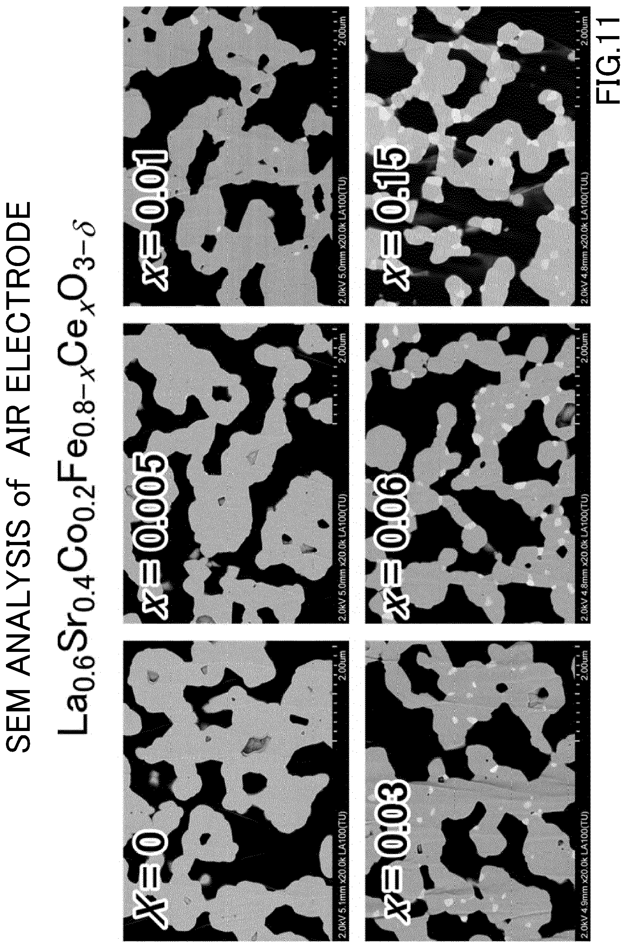

In addition, from the SEM images of oxygen electrodes of Comparative Production Examples and Production Examples 1 to 5, LDC (lanthanum doped ceria) particles observed as bright contrast are observed at x = 0.01 or more, but at x = 0.05, no LDC particles were observed (see Figure 11). Also, according to XRD, no LDC-derived peak was observed at x=0.05, but an LDC-derived peak was observed at x=0.01 or more (not shown). From the above, it was found that cerium is solid-soluble up to x=0.005, and cerium that cannot be solid-dissolved forms LDC particles when x=0.01 or more. This indicates that the solid solution of the tetravalent metal element to the B site is effective in suppressing the increase of Sr at the interface.

From the above, it was found that the diffusion of Sr into the interface between the interlayer and the solid electrolyte and the diffusion of Co into the interlayer can be suppressed by substituting part of Fe in the LSCF with Ce. In the case of Ce, even if the substituted amount is smaller than that of Ti, the amount of Sr at the interface between the solid electrolyte and the interlayer can be sufficiently reduced.

### Evaluation of Power Generation Property in SOFC Mode of Laminate

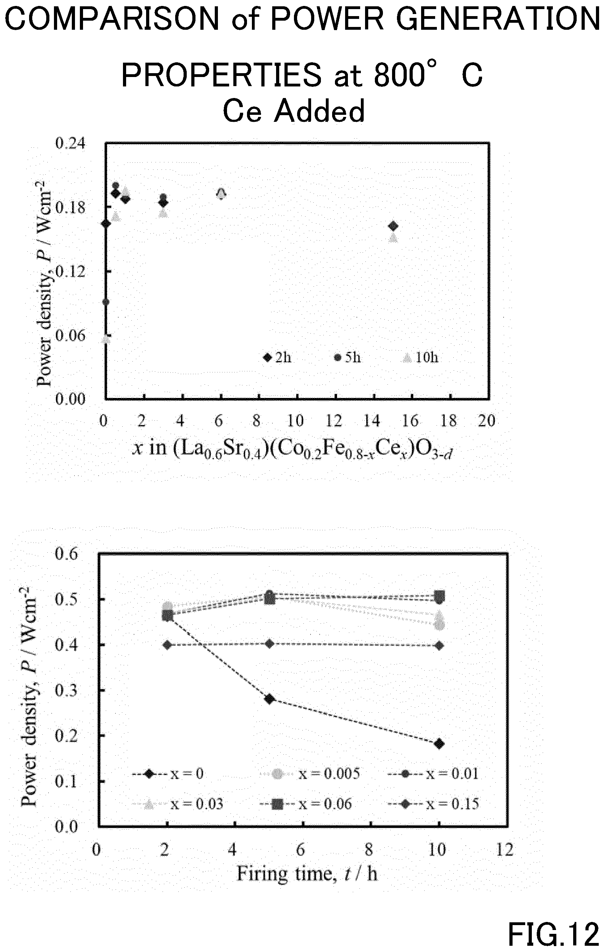

The laminates produced in Example 7 (Groups 4 to 6, Comparative Production Example and Production Examples 1 to 5) were used as SOFC single cells, the operation temperature was set to 800°C, a gas was supplied under conditions in which an air of 50 cm³/min was set on the side of the oxygen electrode and an H₂-3% H₂O of 50 cm³/min was set on the side of the hydrogen electrode, and the maximum power density was measured. The results are shown in FIG. 12.

Fom the results of Groups 4 to 6, it was found that substituting a part of Fe with Ce suppressed the output density from falling below the initial maximum power density. SOFCs manufactured in the range of the Ce substitution amount (x: Ce/(Fe+Ce):Ce/(Co+Fe), hereinafter the amounts are expressed in this order.) from Production Example 1 (Ce substitution amount, 0.005:0.00625:0.005) up to Example 5 (Ce substitution amount, 0.15:0.1875:0.18), maintained higher power generation characteristics than the comparative production examples containing no Ce. In addition, Production Examples 1 to 4 (Ce substitution amount, 0.005 to 0.06: 0.00625 to 0.075: 0.005 to 0.06), demonstrates good ability to maintain power generation characteristics. Further, Production Examples 2 to 4 (Ce substitution amount, 0.01 to 0.06: 0.0125 to 0.075: 0.01 to 0.06), have high power generation characteristics in the initial stage and the power generation characteristics are not deteriorated.

From the above, it has been found that the formation of SrZrO₃ can be suppressed at the interface between the interlayer and the solid electrolyte by including Ce in a part of the B site of the strontium containing perovskite-type composite oxide, in which Sr thermally diffuses, and that this may improve the power generation characteristics in the SOFC mode.

Also, from this, it was found that even when this cell is used as an SOEC, the formation of a high resistance phase can be suppressed and the electrolysis efficiency can be improved.

## Claims

1. A solid oxide electrochemical cell including:
an oxygen electrode containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions);
a solid electrolyte containing zirconium oxide;
a hydrogen electrode, and
an interlayer containing a rare-earth-doped cerium oxide that is provided between the solid electrolyte and the oxygen electrode.

2. The cell according to claim 1,
wherein B in the strontium-containing perovskite-type composite oxide is one or more selected from the group consisting of titanium (Ti), zirconium (Zr) and cerium (Ce).
t

3. The cell according to claims 1 or 2,
wherein Ln in the strontium-containing perovskite-type composite oxide is lanthanum (La) or samarium (Sm).

4. The cell according to any one of claims 1 to 3,
wherein z/(1-z) in the strontium-containing perovskite-type composite oxide is 0.01 or more and 0.40 or less.

5. The cell according to any one of claims 1 to 4,
wherein z/(1-z) in the strontium-containing perovskite-type composite oxide is 0.02 or more and 0.40 or less.

6. The cell according to any one claims 1 to 5
wherein z/(1-z) in the strontium-containing perovskite-type composite oxide, when B is Ce, is 0.005 or more and 0.11 or less.

7. The cell according to any one of claims 1 to 6,
wherein (1-y-z) in the strontium-containing perovskite-type composite oxide is 0.05 or more and 0.30 or less.

8. The cell according to any one of claims 1 to 7,
wherein the zirconium oxide in the solid electrolyte is a rare-earth-doped zirconium oxide.

9. The cell according to any one of claims 1 to 8,
wherein the rare-earth-doped cerium oxide in the interlayer is at least one selected from the group consisting of a gadolinium-doped cerium oxide, a lanthanum-doped cerium oxide, a samarium-doped cerium oxide and an yttrium-doped cerium oxide.

10. The cell according to claim 9,
wherein the zirconium oxide in the solid electrolyte is a rare-earth-doped zirconium oxide, and the rare-earth-doped cerium oxide in the interlayer is a gadolinium-doped cerium oxide.

11. A solid oxide electrochemical device including the cell according to any one of claims 1 to 10.

12. The solid oxide electrochemical device according to claim 11, which is a solid oxide fuel cell and/or a solid oxide electrolysis cell.

13. An oxygen electrode material for a solid oxide electrochemical cell, which is a material containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions).

14. The oxygen electrode material according to claim 13, which is a porous sintered component.

15. A method of producing a solid oxide electrochemical cell, including
a process of acquiring the cell including an oxygen electrode layer containing a strontium-containing perovskite-type composite oxide represented by Ln₁₋ₓSrₓCo_{1-y-z}Fe_{y}B_{z}O_{3-δ} (Ln is a trivalent lanthanide element, B is a tetravalent element, 0<x<1, 0≤y<1, 0<z<1, and 0<z+y<1, and δ is a value that is determined to satisfy charge neutrality conditions), an interlayer containing a rare-earth-doped cerium oxide, a solid electrolyte layer containing zirconium oxide and a hydrogen electrode layer in that order.
